# EUROPEAN PATENT SPECIFICATION

(11) **EP 2 921 760 B1**
(45) Date of publication and mention of the grant of the patent: **24.07.2019**
(21) Application number: 14160518.8
(22) Date of filing: 18.03.2014
(51) Int. Cl.: F16L 59/12

(54) **A spacer device**
Abstandsvorrichtung
Dispositif d'espacement

(43) Date of publication of application: 23.09.2015
(73) Proprietor: Essge-Plast AB, 831 48 Östersund (SE)
(72) Inventor: Olofsson, Hans, 831 38 Östersund (SE); Waldehorn, Mikael, 832 96 Frösön (SE)
(74) Representative: AWA Sweden AB

(56) References cited:
- EP-A1- 0 062 500
- DE-A1- 2 935 174
- GB-A- 1 307 099
- US-A- 3 648 734

## Description

### FIELD OF THE INVENTION

The present invention relates to a spacer device for providing a space between an outer wall of an object and a layer of insulation surrounding the object.

### BACKGROUND OF THE INVENTION

In some circumstances a desire to insulate an object, or typically what is inside of the object, generates problems with condensation and corrosion of the object. For example this is often true for pipelines through which liquid substances such as oil or gas flow. In order to prevent these problems spacer devices are arranged around the pipelines. A known type of spacer device is a metal strip having bent fingers along its edges arranged to rest against the surface of the pipe, as disclosed in US 3648734. Drawbacks of this known spacer device is that it has to be fastened in the insulation layer before mounting it on the pipe, and that the metal fingers tend to scratch the surface of the pipe, which has typically been protected by paint, thereby causing a risk of corrosion.

DE 2935174 and GB 1307099 disclose two different spacer devices which at least partly solves the scratch problem, although in another application. The spacer elements are to be used not to provide a space between the pipe and the insulation, but as intermediate devices between two coaxial pipes. Each spacer device has a metal strip which is provided with plastic spacer elements equidistantly mounted at the metal strip. The spacer elements of the spacer device disclosed in GB 1307099 are mounted at one side of the metal strip. The spacer elements of the spacer device disclosed in DE 2935174 essentially protrude at one side of the metal strip but also cover the metal strip at the other side thereof. When mounted, the spacer elements, respectively the essential protruding portions thereof, protrude from the inner pipe towards the outer pipe. Thereby the risk of scratching the surface of the inner pipe, as regards the spacer device of GB 1307099, or both pipes, as regards the spacer device of DE 2935174 is reduced. However, these prior art spacer devices are not applicable to support an outer insulation layer.

### SUMMARY OF THE INVENTION

It would be advantageous to provide a spacer device, which is mountable on the pipe for subsequent mounting of the insulation layer, and which reduces the problem of scratches.

To better address this concern, in a first aspect of the invention there is presented a spacer device for providing a space between an object and a layer of insulation applied around the object. The spacer device comprises a flexible metal strip, and plastic spacer elements, which are attached to the metal strip and which form protrusions protruding from the metal strip on a first side thereof. The metal strip further comprises strip attachment portions, and the spacer elements comprise spacer attachment portions. Each strip attachment portion is embedded in a respective spacer attachment portion. Each strip attachment portion comprises a recessed seat being recessed from a second side of the metal strip, opposite of the first side, wherein each seat comprises a hole. Each spacer attachment portion extends through the hole and has a head portion resting in the seat at the second side of the metal strip. Thereby a strong interconnection between the metal strip and the plastic spacer elements, and a strong, yet easily arrangeable at the object, spacer device has been obtained.

In accordance with an embodiment of the spacer device, each strip attachment portion protrudes at the first side of the metal strip. Thereby, the strip attachment portions advantageously support the plastic spacer elements.

In accordance with an embodiment of the spacer device, a largest width of the head portion exceeds a largest width of the hole.

In accordance with an embodiment of the spacer device, each spacer element protrudes at both long side edges of the metal strip. Thereby, in case the side of spacer device hits the object the risk of damage on the object is decreased due to the plastic material.

In accordance with an embodiment of the spacer device, the spacer attachment portion extends beyond the hole, and engages with the seat, at the first side of the metal strip.

In accordance with an embodiment of the spacer device, the metal strip comprises interconnection apertures distributed along the length of the metal strip. Thereby it is provided for a simple fastening of the spacer device, and a freedom of cutting the metal strip at different lengths.

In accordance with an embodiment of the spacer device, sets of seats, each set comprising at least one seat, are distributed along the length of the metal strip, and the interconnection apertures are arranged at least at two longitudinally spaced apart positions between two consecutive sets of seats. Thereby an advantageous distribution of the spacer elements has been obtained, while providing for said freedom.

In accordance with an embodiment of the spacer device, each interconnection aperture has a rounded long side edge, which constitutes a bent portion of a lip, which has been cut out of the metal strip and bent to the first side of the metal strip to extend generally in parallel with the first side. This is advantageous when using straps for fastening the spacer device, for instance by strapping opposite ends thereof together after having applied the spacer device around an object. By means of the rounded edge the friction of a strap sliding over the edge is decreased.

In accordance with an embodiment of the spacer device, the metal strip is provided with indents arranged in pairs at regular intervals along its long side edges, each indent having rounded edges, wherein the indents of each pair are arranged opposite to each other. The indents are intended to mark suitable positions to cut the metal strip, and when it is cut the corners at its ends are rounded.

In accordance with an embodiment of the spacer device, the spacer elements are separated at a distance exceeding the width of the metal strip. Thereby it is possible to place two spacer devices on top of each other at right angles to each other, with their metal strips placed on top of each other and close together.

According to another aspect of the present invention, there is provided a method of mounting the above defined spacer device at an object, comprising;
- preparing a spacer device part by cutting the metal strip such that the length of the spacer device part becomes close to the circumference of the object;
- arranging the spacer device at the object with the first side facing the object, whereby the spacer elements abut against the object; and
- interconnecting the ends of the spacer device part with each other.

In accordance with an embodiment of the method, wherein the spacer device comprises the interconnection apertures:
- said cutting is being made between two adjacent interconnection apertures such that the length of the spacer device becomes shorter than said circumference; and
- said interconnecting comprises strapping the spacer device by arranging a strap through the interconnection apertures closest to the ends of the spacer device and tightening the strap. Thereby, advantageously, a tight fit is obtained irrespective of the length of the circumference.

In accordance with an embodiment of the method, it further comprises:
- arranging spacer devices longitudinally of the object and circumferentially around the object, such that the longitudinally and circumferentially arranged spacer devices cross each other; and
- interconnecting the longitudinally and circumferentially arranged spacer devices by aligning interconnection apertures thereof and arranging interconnection straps through the interconnection apertures. This embodiment is particularly advantageous for objects having a large width.

### BRIEF DESCRIPTION OF THE DRAWINGS

The invention will now be described in more detail and with reference to the appended drawings in which:
Fig. 1 is a perspective view from first side of an embodiment of the spacer device according to the present invention;
Fig. 2 is a perspective view from a second side of the spacer device of Fig. 1;
Fig. 3 is a sectional view along the line A-A in Fig. 2;
Fig. 4 is a sectional view of a detail of the spacer device;
Fig. 5 shows the second side of the spacer device of Fig. 1;
Fig. 6 is a cross-sectional view of an insulated pipe having the spacer device mounted thereon;
Fig. 7 illustrates mounting of several spacer devices on a pipe;
Fig. 8 illustrates mounting of several spacer devices on a large cistern;
Fig. 9 illustrates an interconnection of two spacer devices crossing each other;
Fig. 10 is a perspective view of another embodiment of the spacer device which does not fall within the scope of the present invention; and
Fig. 11 is a perspective view of another embodiment of the metal strip comprised in the spacer device.

### DESCRIPTION OF EMBODIMENTS

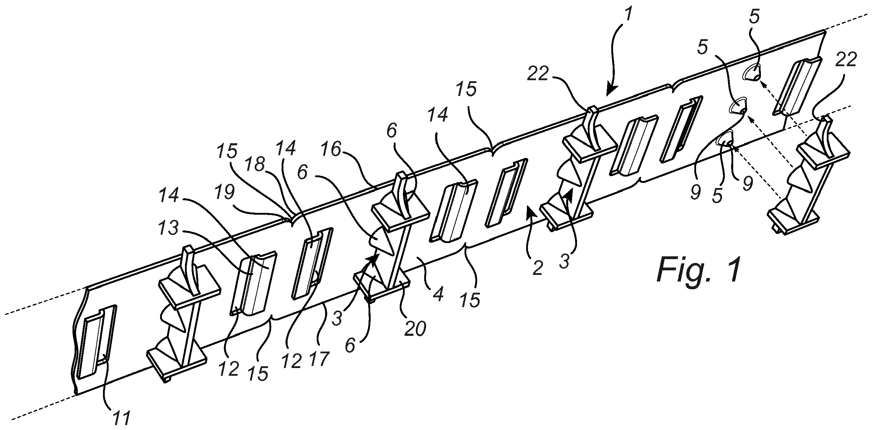

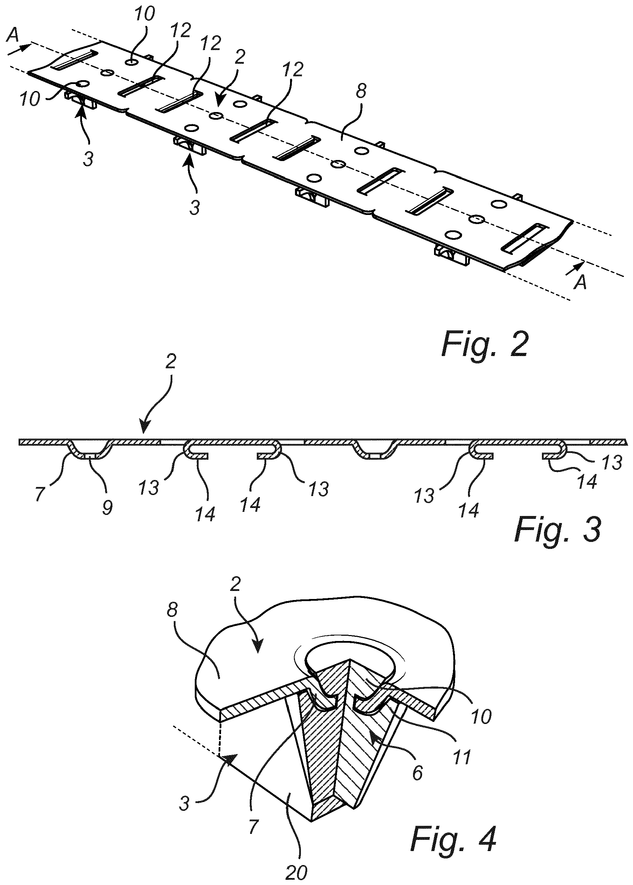

In accordance with a first embodiment of the spacer device 1, as shown in the figures, the spacer device 1 comprises a flexible metal strip 2, and plastic spacer elements 3. The spacer elements 3 are attached to the metal strip 2, and form protrusions, which protrude from the metal strip 2 at a first side 4 of the metal strip 2. The metal strip 2 comprises strip attachment portions 5, and the spacer elements 3 comprise corresponding spacer attachment portions 6, as best shown in Fig. 4. Each strip attachment portion 5 is embedded in a respective spacer attachment portion 6. This embedment is obtained by first manufacturing the metal strip 2, and then molding the spacer elements 3 onto the metal strip 2, for instance by injection molding. In this context it should be noted that in Fig. 1 one of the spacer elements 3 has been removed to show the strip attachment portions 5. This is only for explanatory reasons; the spacer device 1 is not manufactured by mounting separately formed spacer elements 3 at the metal strip 2. The molding of the spacer elements 3 onto the metal strip 2 is an efficient and easily automated method of manufacturing the spacer device 1, which additionally provides a strong attachment of the spacer elements 3 to the metal strip 2. The spacer elements can be regarded as blocks, or feet of the spacer device 1, on which the spacer device 1 is arranged to rest on an outer surface of an object, such as a pipe 23, or a cistern 26 or some other appropriate object.

The strip attachment portions 5 are arranged in sets, each set consisting of three strip attachment portions 5 arranged in a row across the width of the metal strip 2. The sets are equidistantly distributed longitudinally of, i.e. along the length of, the metal strip 2. It should be noted that each set can consist of one or more strip attachment portions 5.

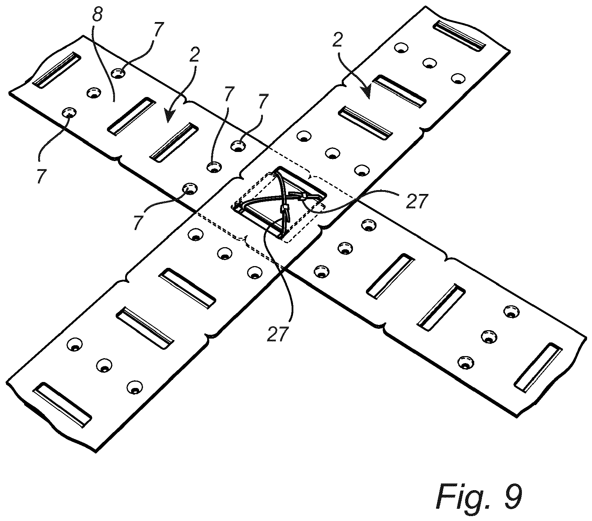

Each strip attachment portion 5 protrudes at the first side 4 of the metal strip 2. The strip attachment portion 5 is formed as a recessed seat 7, which is recessed from a second side 8 of the metal strip 2, opposite to the first side 4, as best seen in Figs. 4 and 9. Thus, the seat 7 is cup shaped, and it has a hole 9 at the centre of the bottom of the seat 7. The corresponding spacer attachment portion 6 extends through the hole 9 and has a head portion 10 resting in the seat 7 at the second side 8 of the metal strip 2. Thereby, the head portion 10, at least substantially, fills the seat 7 and provides a smooth surface at the second side 8 of the metal strip 2. Additionally, the spacer attachment portion 6, at the first side 4 of the metal strip 2, extends beyond the hole 9, and engages with the seat portion 7, at the first side 4 of the metal strip 2. Preferably, at the first side 4, the spacer attachment portion 6 has a width in excess of the largest width of the seat 7 and has an engagement portion 11 engaging with the first side 4 around the seat 7. In other words, at the first side 4, the spacer attachment portion 6 fully covers the seat 7. This embedment of the strip attachment portions 5 into the spacer elements 3 provides for a strong attachment of the plastic spacer elements 3 to the metal strip 2. The spacer attachment portion 6 is generally cone shaped and narrows in a direction away from the first side 4, i.e. in the direction of protrusion of the spacer element 3. In this embodiment having three strip attachment portions 5, consequently the spacer element 3 has three cone shaped spacer attachment portions 6, which are interconnected with an integrate centre wall portion 20 extending laterally of the metal strip 2. At each one of the two side most spacer attachment portions 6, there is an additional wall portion 21 extending perpendicular to the centre wall portion 20, i.e. along the length of the metal strip 2.

Many modifications of the strip attachment portions 5 and the spacer attachment portions 6 are feasible. However, for example, for modifications of the recessed seat variant, in order to provide for a secure joint between the attachment portions 5, 6, it is preferred that a largest width of the head portion exceeds a largest width of the hole, or holes if more than one.

Furthermore, the metal strip 2 comprises interconnection apertures 12 distributed along the length of the metal strip 2. The interconnection apertures 12 are arranged at least at two longitudinally spaced apart positions between two consecutive sets of seat portions 5. Thereby, when cutting the metal strip 2 in parts of a desired length, it is suitable to cut the metal strip 2 between two adjacent interconnection apertures 12, as will be further described below. Each interconnection aperture 12 has a rounded long side edge 13, which constitutes a bent portion of a lip 14, which has been cut out of the metal strip 2 and bent to the first side 4 of the metal strip 2 to extend generally in parallel with the first side 4. Moreover, the metal strip 2 is provided with indents 15 arranged in pairs at regular intervals along the long side edges 16, 17 of the metal strip 2. Each indent has rounded edges 18, 19, wherein the indents 15 of each pair are arranged opposite to each other, i.e. at the respective side edges 16, 17 of the metal strip 2.

The spacer elements 3 are separated at a distance d exceeding the width w of the metal strip 2.

Each spacer element 3 comprises end portions 22 at both ends of the centre wall portion 20, which end portions 22 protrude at both long side edges 16, 17 of the metal strip 2.

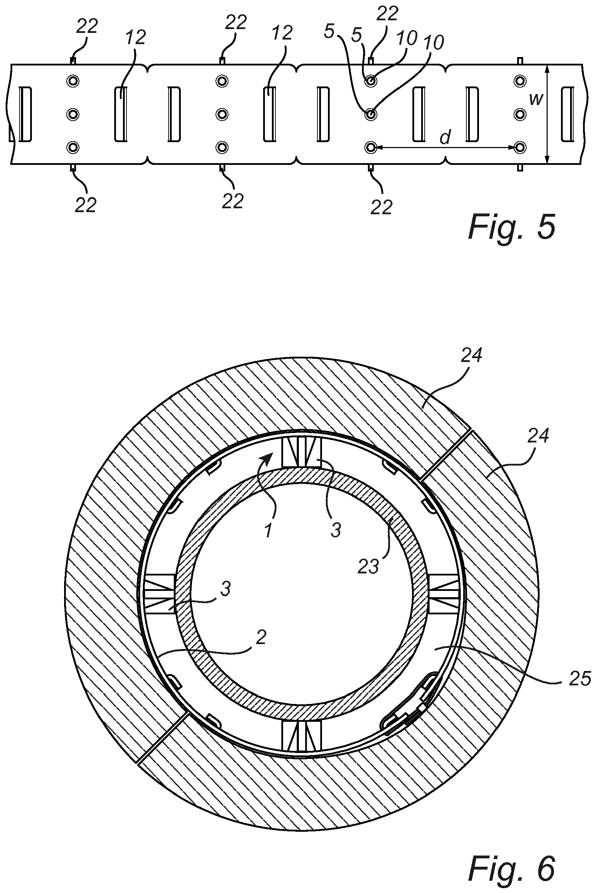

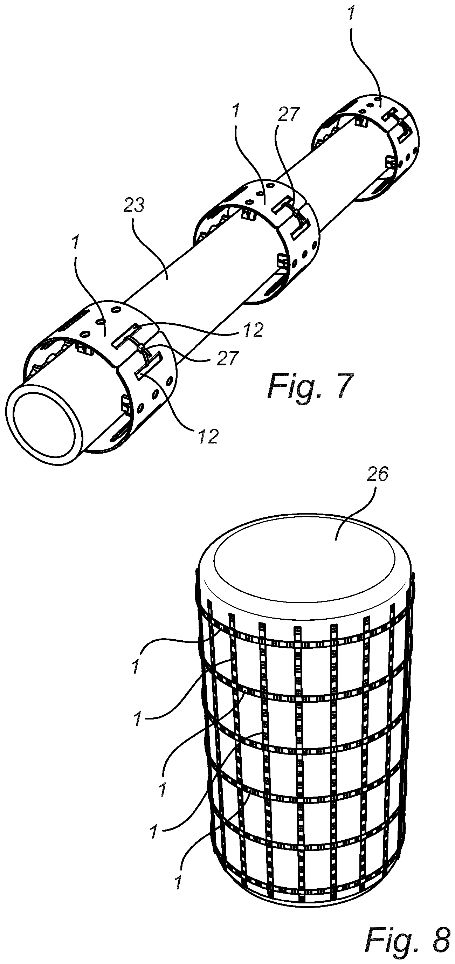

Fig. 7 show a number of spacer devices 1 mounted on a pipe, i.e. around the peripheral of the pipe 23, at regular distances along the length of the pipe 23. The spacer devices 1 have been turned with the spacer elements 3 abutting against the outer surface of the pipe 23. Fig. 6, in cross-section, shows a pipe 23 on which spacer devices 1 have been mounted and on which half-pipe shaped insulating pieces 24 have been mounted on the spacer devices 1 and concentrically with the pipe 23. A tubular space 25 has thus been created between the insulation material and the pipe 23.

Fig. 8 shows another example of mounting the spacer devices 1 on a cylinder shaped cistern 26. The spacer devices 1 have been arranged in a grid structure both along the height of the cistern 26, and along the periphery of the cistern.

In general, en embodiment of a method of mounting a spacer device around an object 23, 26, comprises:
- preparing a spacer device by cutting the metal strip such that the length of the spacer device becomes close to the circumference of the object;
- arranging the spacer device 1 around the object 23, 26 with the first side 4 facing the object 23, 26, whereby the spacer elements 3 abut against the object 23, 26; and
- interconnecting the ends of the spacer device 3 with each other.

The objects exemplified here are circular, which is the typical case. However, the spacer device 1 is useful for objects of other shapes as well. Generally, the spacer device 1 is used for hollow objects, since the problems of condense typically arise when there are temperature differences between an enclosed liquid and the surrounding environment.

Preferably, the cutting is made between two adjacent interconnection apertures 12 such that the length of the spacer device 1 becomes shorter than said circumference; and the interconnection comprises strapping the spacer device 1 by arranging a strap 27 through the interconnection apertures 12 closest to the ends of the spacer device 1 and tightening the strap 27.

Referring to the cistern application of Fig. 8, the method comprises arranging spacer devices 1 longitudinally of the object 26 and circumferentially around the object 26, such that the longitudinally and circumferentially arranged spacer devices 1 cross each other; and interconnecting the longitudinally and circumferentially arranged spacer devices by aligning interconnection apertures 12 thereof and arranging interconnection straps 27 through the interconnection apertures 12.

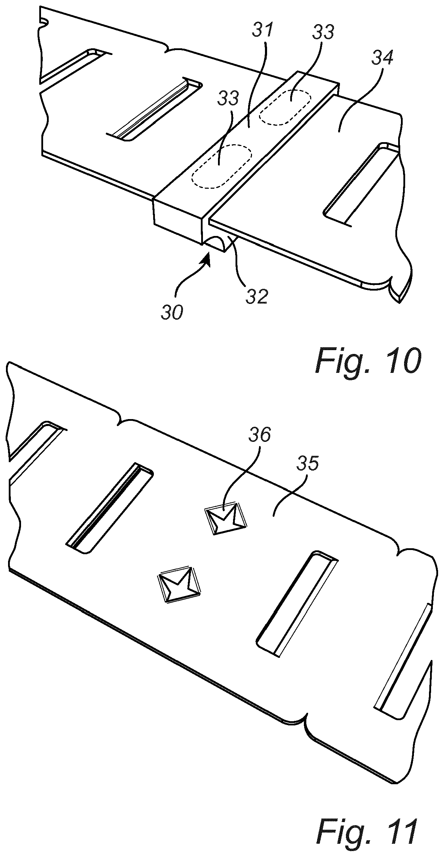

There are many alternative embodiments of the spacer devices. According to one alternative of the spacer device which does not fall under the present invention, as shown in Fig. 10, the spacer elements 30 are molded at the metal strip 34 to enclose a portion of the metal strip 34. The spacer element 30 has a first portion 32 protruding at the first side of the metal strip 34, and a second portion 31 extending laterally across the metal strip 34 at its second side, and being integral with the first portion 32 by covering the long side edges of the metal strip 34. Furthermore, the second portion 31 is interconnected with the first portion at spacer attachment portions extending through strip attachment portions 33 constituting holes through the metal strip 34. In other words the spacer element extends around the metal strip 34 and through the holes 33. This embodiment has advantages but on the other hand it may be regarded as a disadvantage that the spacer elements are slightly raised above the surface of the metal strip at the second surface, at which the insulating elements are received.

According to yet another embodiment of the spacer device, the seats of the strip attachment portions are differently manufactured and shaped, as shown in Fig. 11. Each set of strip attachment portions contains two strip attachment portions, each comprising a recessed seat, 36 arranged side by side laterally of the metal strip 35. Each seat is formed by cutting a cross in the metal strip 35 and bending the four tips, or pointed tongues, thus obtained such that they protrude on the first side of the metal strip 35, and extend obliquely towards a common centre point. When molding the spacer element, the seat is filled with the plastic forming a head portion, and the plastic extends through the opening defined by the tips and embed the tips 36. Thereby a spacer attachment portion similar to that of the first embodiment is formed.

While the invention has been illustrated and described in detail in the drawings and foregoing description, such illustration and description are to be considered illustrative or exemplary and not restrictive. The invention is not limited to the disclosed embodiments. For instance, as an alternative, the spacer elements do not protrude at the sides of the metal strip. Many different shapes of the spacer elements as a whole are feasible as well, etc.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

## Claims

1. A spacer device for providing a space between an object and a layer of pieces of insulation material applied around the object, the spacer device (1) comprising a flexible metal strip (2), and plastic spacer elements (3) molded to the metal strip and forming protrusions protruding from the metal strip on a first side (4) thereof, wherein the metal strip comprises strip attachment portions (5), wherein the spacer elements comprise spacer attachment portions (6), wherein each strip attachment portion is embedded in a respective spacer attachment portion, wherein the spacer device is arranged to be mounted at a surface of the object with the first side facing that surface, such that the spacer elements abut against the surface, **characterised in that** each strip attachment portion (5) comprises a seat (7), which comprises a hole (9), wherein the seat (7) is recessed from the second side (8) of the metal strip (2), and wherein each spacer attachment portion extends through the hole and has a head portion (10) resting in the seat at a second side (8) of the metal strip (2), opposite to the first side (4).

2. The spacer device according to claim 1, wherein each strip attachment portion (5) protrudes at the first side (4) of the metal strip (2).

3. The spacer device according to any one of the preceding claims, wherein a largest width of the head portion (10) exceeds a largest width of the hole (9).

4. The spacer device according to any one of the preceding claims, wherein the spacer attachment portion (6) extends beyond the hole (9), and engages with the seat (7), at the first side (4) of the metal strip (2).

5. The spacer device according to any one of the preceding claims, wherein the metal strip (2) comprises interconnection apertures (12) distributed along the length of the metal strip (2).

6. The spacer according to claim 5, wherein sets of seats, each set comprising at least one seat (7), are distributed along the length of the metal strip (2), and wherein the interconnection apertures (12) are arranged at least at two longitudinally spaced apart positions between two consecutive sets of seats.

7. The spacer according to claim 5 or 6, wherein each interconnection aperture (12) has a rounded long side edge (13), which constitutes a bent portion of a lip (14), which has been cut out of the metal strip (2) and bent to the first side (4) of the metal strip to extend generally in parallel with the first side.

8. The spacer device according to any one of the preceding claims, wherein the metal strip (2) is provided with indents (15) arranged in pairs at regular intervals along its long side edges (16, 17), each indent having rounded edges, wherein the indents of each pair are arranged opposite to each other.

9. The spacer device according to any one of the preceding claims, wherein the spacer elements (3) are separated at a distance exceeding the width of the metal strip (2).

10. The spacer device according to any one of the preceding claims, wherein each spacer element (3) protrudes at both long side edges (16, 17) of the metal strip (2).

11. A method of arranging a spacer device according to any one of the preceding claims at an object, comprising;
- preparing the spacer device (1) by cutting the metal strip (2) such that the length of the spacer device becomes close to the circumference of the object;
- arranging the spacer device at the object with the first side (4) facing the object, whereby the spacer elements (3) abut against the object; and
- interconnecting the ends of the spacer device with each other.

12. The method according to claim 11, wherein the spacer device (1) comprises the interconnection apertures (12):
- said cutting being made between two adjacent interconnection apertures such that the length of the spacer device becomes shorter than said circumference; and
- said interconnecting comprising strapping the spacer device by arranging a strap (27) through the interconnection apertures closest to the ends of the spacer device and tightening the strap.

13. The method according to claim 11 or 12, further comprising:
- arranging spacer devices (1) longitudinally of the object and circumferentially around the object, such that the longitudinally and circumferentially arranged spacer devices cross each other; and
- interconnecting the longitudinally and circumferentially arranged spacer devices by aligning interconnection apertures (12) thereof and arranging interconnection straps through the interconnection apertures.

## Patentansprüche

1. Abstandshaltervorrichtung zum Bereitstellen eines Abstands zwischen einem Gegenstand und einer Schicht von Stücken eines Isoliermaterials, die um den Gegenstand herum angebracht werden, wobei die Abstandshaltervorrichtung (1) einen flexiblen Metallstreifen (2) und Kunststoffabstandshalterelemente (3) aufweist, die am Metallstreifen angeformt sind und Vorsprünge bilden, die von dem Metallstreifen auf einer ersten Seite (4) desselben vorspringen, wobei der Metallstreifen Streifenbefestigungsteile (5) umfasst, wobei die Abstandshalterelemente Abstandshalterbefestigungsteile (6) umfassen, wobei jeder Streifenbefestigungsteil in einem entsprechenden Abstandshalterbefestigungsteil eingebettet ist, wobei die Abstandshaltervorrichtung angeordnet ist, um an einer Oberfläche des Gegenstands mit der ersten Seite befestigt zu werden, die dieser Oberfläche gegenüberliegt derart, dass die Abstandshalterelemente an die Oberfläche anstoßen,
**dadurch gekennzeichnet, dass** jeder Streifenbefestigungsteil (5) einen Sitz (7) umfasst, der ein Loch (9) umfasst, wobei der Sitz (7) aus der zweiten Seite (8) des Metallstreifens (2) ausgespart ist, und wobei jeder Abstandshalterbefestigungsteil sich durch das Loch erstreckt und einen Kopfteil (10) aufweist, der im Sitz auf einer zweiten Seite (8) des Metallstreifens (2) gegenüber der ersten Seite (4) ruht.

2. Abstandshaltervorrichtung nach Anspruch 1, wobei jeder Streifenbefestigungsteil (5) auf der ersten Seite (4) des Metallstreifens (2) vorspringt.

3. Abstandshaltervorrichtung nach einem der vorstehenden Ansprüche, wobei eine größte Breite des Kopfteils (10) eine größte Weite des Lochs (9) übersteigt.

4. Abstandshaltervorrichtung nach einem der vorstehenden Ansprüche, wobei der Abstandshalterbefestigungsteil (6) sich über das Loch (9) hinaus erstreckt und in Eingriff mit dem Sitz (7) auf der ersten Seite (4) des Metallstreifens (2) tritt.

5. Abstandshaltervorrichtung nach einem der vorstehenden Ansprüche, wobei der Metallstreifen (2) Verbindungsöffnungen (12) umfasst, die der Länge des Metallstreifens (2) entlang verteilt sind.

6. Abstandshalter nach Anspruch 5, wobei Sätze von Sitzen der Länge des Metallstreifens (2) entlang verteilt sind, wobei jeder Satz mindestens einen Satz (7) umfasst, und wobei die Verbindungsöffnungen (12) mindestens in zwei längs beabstandeten Positionen zwischen zwei aufeinanderfolgenden Sätzen von Sitzen angeordnet sind.

7. Abstandshalter nach Anspruch 5 oder 6, wobei jede Verbindungsöffnung (12) eine gerundete, lange Seitenkante (13) aufweist, die einen gebogenen Teil einer Lippe (14) bildet, die aus dem Metallstreifen (2) herausgeschnitten worden ist und zur ersten Seite (4) des Metallstreifens hin gebogen ist, um sich allgemein parallel zu der ersten Seite zu erstrecken.

8. Abstandshaltervorrichtung nach einem der vorstehenden Ansprüche, wobei der Metallstreifen (2) mit Kerben (15) versehen ist, die in Paaren in regelmäßigen Intervallen entlang seiner Seitenkanten (16, 17) angeordnet sind, wobei jede Kerbe gerundete Kanten aufweist, und wobei die Kerben von jedem Paar einander gegenüber angeordnet sind.

9. Abstandshaltervorrichtung nach einem der vorstehenden Ansprüche, wobei die Abstandshalterelemente (3) mit einem Abstand voneinander getrennt sind, der die Breite des Metallstreifens (2) übersteigt.

10. Abstandshaltervorrichtung nach einem der vorstehenden Ansprüche, wobei jedes Abstandshalterelement (3) an beiden langen Seitenkanten (16, 17) des Metallstreifens (2) vorspringt.

11. Verfahren zur Anordnung einer Abstandshaltervorrichtung nach einem der vorstehenden Ansprüche an einem Gegenstand, umfassend:
- Herstellen der Abstandshaltervorrichtung (1) durch Zuschneiden des Metallstreifens (2) derart, dass die Länge der Abstandshaltervorrichtung nahe an den Umfang des Gegenstands rückt;
- Anordnen der Abstandshaltervorrichtung am Gegenstand mit der ersten Seite (4) gegenüber dem Gegenstand, sodass die Abstandshalterelemente (3) gegen den Gegenstand stoßen; und
- Verbinden der Enden der Abstandshaltervorrichtung miteinander.

12. Verfahren nach Anspruch 11, wobei die Abstandshaltervorrichtung (1) die Verbindungsöffnungen (12) umfasst:
- wobei das Schneiden zwischen zwei benachbarten Verbindungsöffnungen so erfolgt, dass die Länge der Abstandshaltervorrichtung kürzer als der besagte Umfang wird;
und
- wobei das Verbinden das Anschnallen der Abstandshaltervorrichtung umfasst, indem ein Riemen (27) durch die Verbindungsöffnungen angeordnet wird, die am nächsten zu den Enden der Abstandshaltervorrichtung liegen, und der Riemen angezogen wird.

13. Verfahren nach Anspruch 11 oder 12, ferner umfassend:
- Anordnen der Abstandshaltervorrichtungen (1) längs zum Gegenstand und um den Gegenstand umlaufend, sodass die längs und umlaufend angeordneten Abstandshaltervorrichtungen sich einander kreuzen; und
- Verbinden der längs und umlaufend angeordneten Abstandshaltervorrichtungen durch Ausrichten der Verbindungsöffnungen (12) derselben und Anordnen der Verbindungsriemen durch die Verbindungsöffnungen.

## Revendications

1. Dispositif d'espacement destiné à fournir un espace entre un objet et une couche de pièces de matériau d'isolation appliquée autour de l'objet, le dispositif d'espacement (1) comprenant une bande métallique flexible (2), et des éléments d'espacement en plastique (3) moulés sur la bande métallique et formant des protrusions faisant saillie depuis la bande métallique sur un premier côté (4) de celui-ci, dans lequel la bande métallique comprend des parties de fixation de bande (5), dans lequel les éléments d'espacement comprennent des parties de fixation d'espacement (6), dans lequel chaque partie de fixation de bande est intégrée dans une partie de fixation d'espacement respective, dans lequel le dispositif d'espacement est agencé pour être monté au niveau d'une surface de l'objet avec le premier côté faisant face à cette surface, de sorte que les éléments d'espacement viennent buter contre la surface,
**caractérisé en ce que** chaque partie de fixation de bande (5) comprend un siège (7), qui comprend un trou (9), dans lequel le siège (7) est renfoncé par rapport au second côté (8) de la bande métallique (2), et dans lequel chaque partie de fixation d'espacement s'étend à travers le trou et comporte une partie de tête (10) reposant dans le siège au niveau d'un second côté (8) de la bande métallique (2), située à l'opposé du premier côté (4).

2. Dispositif d'espacement selon la revendication 1, dans lequel chaque partie de fixation de bande (5) fait saillie au niveau du premier côté (4) de la bande métallique (2).

3. Dispositif d'espacement selon l'une quelconque des revendications précédentes, dans lequel une plus grande largeur de la partie de tête (10) dépasse une plus grande largeur du trou (9).

4. Dispositif d'espacement selon l'une quelconque des revendications précédentes, dans lequel la partie de fixation d'espacement (6) s'étend au-delà du trou (9), et vient en prise avec le siège (7), au niveau du premier côté (4) de la bande métallique (2).

5. Dispositif d'espacement selon l'une quelconque des revendications précédentes, dans lequel la bande métallique (2) comprend des ouvertures d'interconnexion (12) distribuées le long de la longueur de la bande métallique (2).

6. Dispositif d'espacement selon la revendication 5, dans lequel des ensembles de sièges, chaque ensemble comprenant au moins un siège (7), sont distribués le long de la longueur de la bande métallique (2), et dans lequel les ouvertures d'interconnexion (12) sont agencées au moins au niveau de deux positions espacées de manière longitudinale entre deux ensembles consécutifs de sièges.

7. Dispositif d'espacement selon la revendication 5 ou la revendication 6, dans lequel chaque ouverture d'interconnexion (12) comporte un bord latéral long et arrondi (13), qui constitue une partie courbe d'une lèvre (14), qui a été découpé de la bande métallique (2) et incurvée vers le premier côté (4) de la bande métallique afin de s'étendre généralement de manière parallèle au premier côté.

8. Dispositif d'espacement selon l'une quelconque des revendications précédentes, dans lequel la bande métallique (2) est pourvue d'encoches (15) agencées en paires à des intervalles réguliers le long de ses bords latéraux longs (16, 17), chaque encoche présentant des bords arrondis, dans lequel les encoches de chaque paire sont agencées à l'opposé l'une de l'autre.

9. Dispositif d'espacement selon l'une quelconque des revendications précédentes, dans lequel les éléments d'espacement (3) sont séparés à une distance dépassant la largeur de la bande métallique (2).

10. Dispositif d'espacement selon l'une quelconque des revendications précédentes, dans lequel chaque élément d'espacement (3) fait saillie au niveau des deux bords latéraux longs (16, 17) de la bande métallique (2).

11. Procédé permettant d'agencer un dispositif d'espacement selon l'une quelconque des revendications précédentes au niveau d'un objet, comprenant ;
- la préparation du dispositif d'espacement (1) en découpant la bande métallique (2) de sorte que la longueur du dispositif d'espacement se rapproche de la circonférence de l'objet ;
- l'agencement du dispositif d'espacement au niveau de l'objet avec le premier côté (4) faisant face à l'objet, selon quoi les éléments d'espacement (3) viennent buter contre l'objet ; et
- l'interconnexion des extrémités du dispositif d'espacement les unes avec les autres.

12. Procédé selon la revendication 11, dans lequel le dispositif d'espacement (1) comprend les ouvertures d'interconnexion (12) :
- ladite découpe étant effectuée entre deux ouvertures d'interconnexion adjacentes de sorte que la longueur du dispositif d'espacement devienne inférieure à ladite circonférence ;
et
- ladite interconnexion comprenant le bandage du dispositif d'espacement par l'agencement d'une sangle (27) à travers les ouvertures d'interconnexion les plus proches des extrémités du dispositif d'espacement et le serrage de la sangle.

13. Procédé selon la revendication 11 ou la revendication 12, comprenant en outre :
- l'agencement des dispositifs d'espacement (1) de manière longitudinale de l'objet et de manière circonférentielle autour de l'objet, de sorte que les dispositifs d'espacement agencés de manière longitudinale et circonférentielle se croisent les uns avec les autres ; et
- l'interconnexion des dispositifs d'espacement agencés de manière longitudinale et circonférentielle par l'alignement des ouvertures d'interconnexion (12) de ceux-ci et l'agencement de sangles d'interconnexion à travers les ouvertures d'interconnexion.
